# EUROPÄISCHE PATENTSCHRIFT

(11) **EP 0 960 273 B1**
(45) Veröffentlichungstag und Bekanntmachung des Hinweises auf die Patenterteilung: **16.04.2003**
(21) Anmeldenummer: 98936238.9
(22) Anmeldetag: 19.06.1998
(51) Int. Cl.: F02M 55/00

(54) **KRAFTSTOFFZULEITUNGSEINRICHTUNG**
FUEL INJECTION DEVICE
DISPOSITIF D'ALIMENTATION EN CARBURANT

(30) Priorität: 03.12.1997 DE 19753518
(43) Veröffentlichungstag der Anmeldung: 01.12.1999
(73) Patentinhaber: ROBERT BOSCH GMBH, 70442 Stuttgart (DE)
(72) Erfinder: HOFMANN, Karl, D-71686 Remseck (DE)
(86) Internationale Anmeldenummer: DE9801697
(87) Internationale Veröffentlichungsnummer: WO99028617

(56) Entgegenhaltungen:
- EP-A- 0 569 727
- DE-A- 19 524 520
- FR-A- 2 266 550
- US-A- 3 860 178

## Beschreibung

Die Erfindung betrifft eine Kraftstoffzuleitungseinrichtung für eine im Zylinderkopf einer Brennkraftmaschine eingesetzte Kraftstoffeinspritzdüse mit einem Druckstutzen, der zulaufseitig mit dem Anschlußstück eines Zulaufrohrs dicht verbunden ist und der auslaufseitig über eine Dichtfläche axial gegen eine Sitzfläche am Düsenhaltekörper der Kraftstoffeinspritzdüse gepreßt ist.

Eine derartige Kraftstoffzuleitungseinrichtung geht beispielsweise aus der EP 0 569 727 A1 sowie der DE 195 24 520 A1 hervor.

Problematisch bei diesen Kraftstoffzuleitungseinrichtungen ist es, daß der Druckstutzen durch die Verschraubung mit großer Andruckkraft direkt an den Düsenhaltekörper gepreßt wird. Hierdurch können insbesondere bei hohen Leitungsdrücken in der Größenordnung von > 1200bar Risse im Düsenhaltekörper auftreten, die durch hohe Spannungen an der Dichtfläche und durch innerhalb der Kraftstoffzuleitung herrschende hohe Innendrücke hervorgerufen werden.

Dabei entsteht der Hauptanteil der Spannungen durch das hohe Anzugsmoment, mit dem die Dichtfläche auf den Düsenhaltekörper drückt.

Aufgabe der Erfindung ist es daher, eine Kraftstoffzuleitungseinrichtung der gattungsgemäßen Art derart weiterzubilden, daß das hohe Anzugsmoment des Druckstutzens nicht auf die Dichtfläche wirkt, sondern von dieser weitestgehend entkoppelt ist.

### Vorteile der Erfindung

Diese Aufgabe wird bei einer Kraftstoffzuleitungseinrichtung der eingangs beschriebenen Art erfindungsgemäß dadurch gelöst, daß an dem Druckstutzen eine Schulter ausgebildet ist, die beim Einschrauben des Druckstutzens an einer zu ihr komplementär an dem Düsenhaltekörper ausgebildeten, ringförmig umlaufenden Andruckfläche zur Aufnahme des Anzugsmoments gepreßt wird und daß die Dichtfläche an einem zwischen dem Druckstutzen und dem Düsenhaltekörper vorgesehenen durch Einschrauben des Druckstutzens deformierbaren Körper angeordnet ist.

Durch die an dem Druckstutzen ausgebildete Schulter und die an dem Düsenhaltekörper ausgebildete Andruckfläche wird auf besonders vorteilhafte Weise das Anzugsmoment, mit welchem der Druckstutzen in den Düsenhaltekörper eingeschraubt wird, gewissermaßen "abgefangen". Die dichte Verbindung wird dabei durch den zwischen dem Düsenhaltekörper und dem Druckstutzen vorgesehenen deformierbaren Körper hergestellt, an dem die Dichtfläche vorgesehen ist, und der beim Einschrauben des Druckstutzens in den Düsenhaltekörper aufgrund des obenbeschriebenen "Abfangens" des Anzugmoments durch die Schulter am Druckstutzen und die Andruckfläche am Düsenhaltekörper nur mit einem kleinen Teil der durch das Einschrauben erzeugten Kräften verformt wird.

Hierdurch werden anders ausgedrückt die Druckkräfte, welche durch den mit hohem Anzugsmoment einzuschraubenden Druckstutzen entstehen, nicht auf die Sitzfläche des Düsenhaltekörpers, sondern auf die ringförmig umlaufende Andruckfläche eingeleitet.

Was die Ausbildung des deformierbaren Körpers betrifft, so sind hier rein prinzipiell die unterschiedlichsten Ausführungsformen denkbar.

Eine sehr vorteilhafte Ausführungsform sieht vor, daß der deformierbare Körper ein, vorzugsweise aus einem leicht verformbaren Stahl bestehendes Formteil ist, das an seiner der Sitzfläche am Düsenhalter zugewandten Seite die Dichtfläche und an seiner dem Druckstutzen zugewandten Seite konisch ausgebildet ist und eine Dichtkante aufweist, die in einer konischen Ausnehmung des Druckstutzens dichtend anliegt.

Ein derartiger Körper weist aufgrund seiner insbesondere in Axialrichtung optimalen Verformbarkeit besonders gute Dichteigenschaften auf.

Bei einer anderen Ausführungsform ist vorgesehen, daß der deformierbare Körper ein aus einem leicht deformierbaren Werkstoff, beispielsweise Stahl bestehender Dichtring ist. Dieser kann beispielsweise ein 0-Ring sein. Darüber hinaus ist es auch möglich, daß er im Schnitt eine W-förmige Gestalt aufweist.

Sowohl die O-ringförmige als auch die im Schnitt W-förmige Gestalt ermöglichen eine optimale Abdichtung bei Ausübung eines durch das Einschrauben des Druckstutzens entstehenden axialen Drucks.

Bei einer wiederum anderen, sehr vorteilhaften Ausführungsform ist vorgesehen, daß der deformierbare Körper ein vorzugsweise aus einem leicht verformbaren Stahl oder Weicheisen bestehender Ring ist, der von einem in einem in ihm ausgebildeten ringförmig umlaufenden Ausnehmung eingreifenden gummielastischen Dichtring formschlüssig umgeben ist.

Durch einen derartigen deformierbaren Körper wird eine sehr gute Abdichtung bei insbesondere auch höheren Anzugsmomenten ermöglicht.

Die erfindungsgemäße Aufgabe wird darüber hinaus auch noch durch eine Kraftstoffzuleitungseinrichtung für eine im Zylinderkopf einer Brennkraftmaschine eingesetzte Kraftstoffeinspritzdüse mit einem einen Durchgang im Zylinderkopf durchsetzenden Druckstutzen, der zulaufseitig mit dem Anschlußstück eines Zulaufrohrs dicht verbunden ist und der auslaufseitig über eine Dichtfläche axial gegen eine Sitzfläche am Düsenhaltekörper der Kraftstoffeinspritzdüse gepreßt ist, dadurch gelöst, daß an dem Druckstutzen eine Schulter ausgebildet ist, die bei Einschrauben des Druckstutzens an einer zu ihr komplementären, an dem Düsenhaltekörper ausgebildeten ringförmig umlaufenden Andruckfläche zur Aufnahme des Anzugsmoments gepreßt wird und daß an seiner dem Düsenhaltekörper zugewandten Seite eine definiert deformierbare Dichtlippe einstückig ausgebildet ist.

Diese Kraftstoffzuleitungseinrichtung hat insbesondere den Vorteil, daß ein zwischen dem Druckstutzen und dem Düsenhaltekörper gelegter deformierbare Körper vollständig entfallen kann, da an dem Düsenhaltekörper selbst eine definiert deformierbare Dichtlippe einstückig ausgebildet ist.

Was die Ausbildung der Dichtlippe betrifft, so sind rein prinzipiell die unterschiedlichsten Ausführungsformen denkbar.

Eine insbesondere hinsichtlich der Verformbarkeits- und dadurch bedingt Abdichteigenschaften besonders vorteilhafte Ausführungsform sieht vor, daß die Dichtlippe im Schnitt eine schwalbenschwanzähnliche Gestalt aufweist.

### Zeichnung

Weitere Vorteile und Merkmale der Erfindung sind Gegenstand der nachfolgenden Beschreibung sowie der zeichnerischen Darstellung einiger Ausführungsbeispiele.

In der Zeichnung zeigen:
- Fig. 1: teilweise schnittbildlich eine Kraftstoffzuleitungseinrichtung, welche von der Erfindung Gebrauch macht;
- Fig. 2: teilweise weggebrochen und schnittbildlich eine weitere Ausführungsform einer Kraftstoffzuleitungseinrichtung, die von der Erfindung Gebrauch macht;
- Fig. 3: eine andere Ausführungsform einer Kraftstoffzuleitungseinrichtung, die von der Erfindung Gebrauch macht;
- Fig. 4: teilweise weggebrochen und schnittbildlich eine wiederum andere von der Erfindung Gebrauch machende Ausführungsform einer Kraftstoffzuleitungseinrichtung und
- Fig. 5: teilweise weggebrochen und schnittbildlich ein weiteres Ausführungsbeispiel einer Kraftstoffzuleitungseinrichtung, die von der Erfindung Gebrauch macht.

Um einer in einem (nicht dargestellten) Zylinderkopf einer Brennkraftmaschine eingesetzten Kraftstoffeinspritzdüse Kraftstoff zuzuführen, ist in einem Düsenhaltekörper 10 eine Kraftstoffzufuhrleitung 11 vorgesehen, welche mit einer in einem Druckstutzen 20, der mittels eines Gewindes 22 in den Düsenhaltekörper 10 eingeschraubt ist, ausgebildeten Kraftzufuhrleitung 24 verbunden ist.

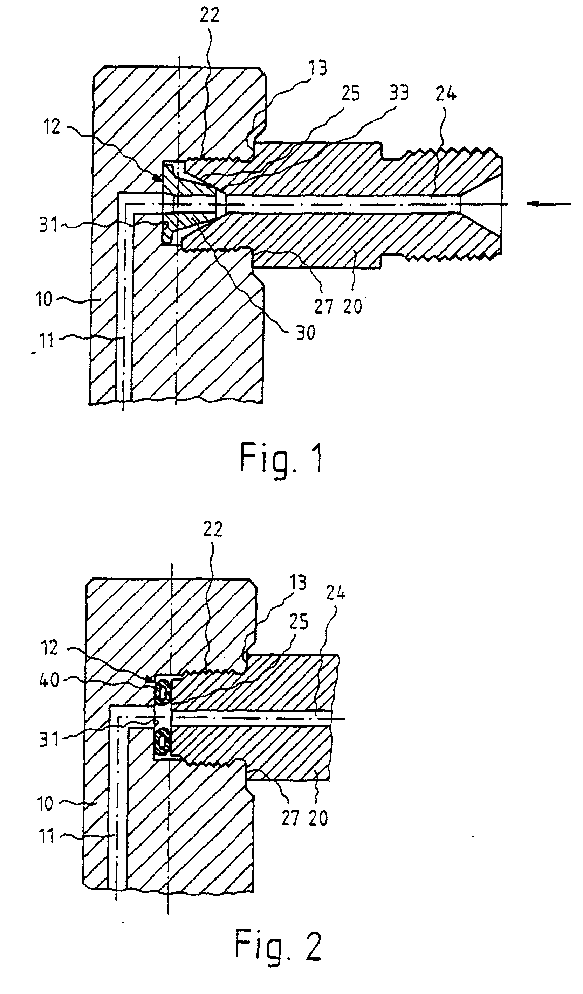

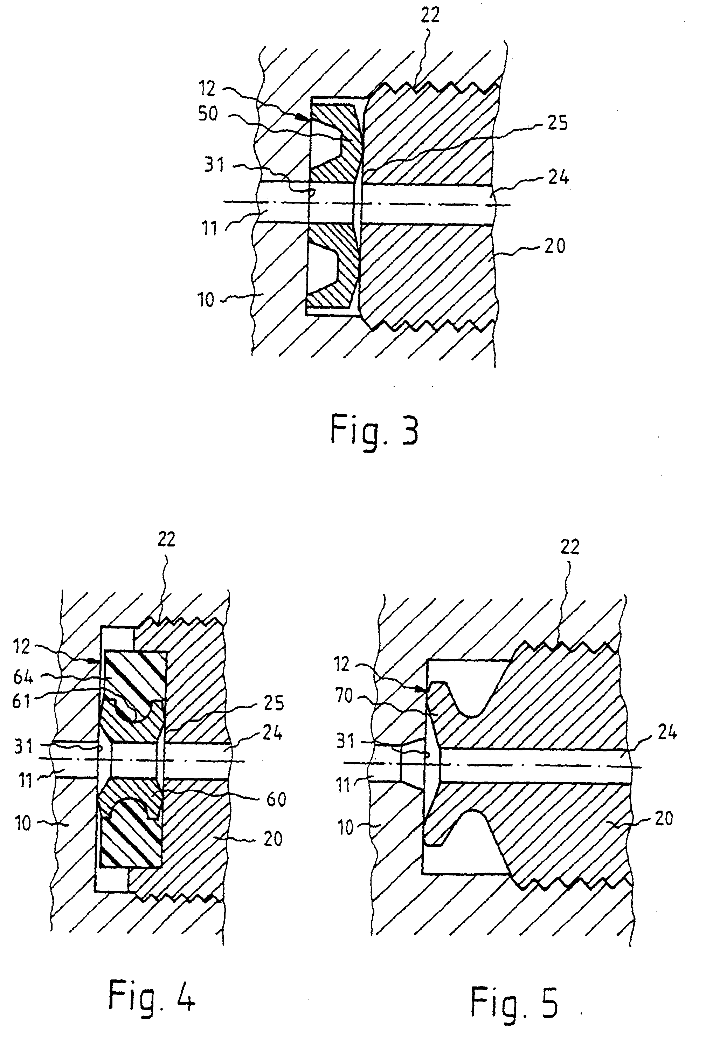

Der Druckstutzen 20 ist zulaufseitig mit einem (nicht dargestellten) Zulaufrohr dicht verbunden. Auslaufseitig ist er beispielsweise mit einer konischen (vgl. Fig. 1) oder zylindrischen Ausnehmung (vgl. Fig. 4) oder wie in Fig. 2, Fig. 3, Fig. 4 dargestellt, mit einer im wesentlichen planen Fläche versehen.

Zwischen dem Druckstutzen 20 und einer an dem Düsenhaltekörper 10 ausgebildeten Sitzfläche 12 ist bei einem ersten Ausführungsbeispiel ein deformierbarer Körper 30 vorgesehen, der ein aus einem leicht verformbaren Stahl bestehendes Formteil ist, welches an seiner der Sitzfläche 12 am Düsenhaltekörper 10 zugewandten Seite eine Dichtfläche 31 und an seiner dem Druckstutzen 20 zugewandten Seite konisch ausgebildet ist und eine Dichtkante 33 aufweist, die an der auslaufseitig ausgebildeten konischen Ausnehmung des Druckstutzens 20 dichtend anliegt.

Der Druckstutzen 20 weist ferner eine Schulter 27 auf, die an einer ringförmig umlaufenden an dem Düsenhaltekörper 10 ausgebildeten Andruckfläche 13 beim Einschrauben des Druckstutzens 20 zur Anlage kommt und das Anzugsmoment im wesentlichen vollständig aufnimmt.

Durch diese Schulter 27 und die Andruckfläche 13 wird insbesondere verhindert, daß auf den deformierbaren Körper 30 ein sehr hohes Anzugsmoment ausgeübt wird. Vielmehr wird der deformierbare Körper 30 mit wesentlich niedrigeren, hauptsächlich axial wirkenden Kräften deformiert, wodurch aufgrund seiner Dichtkante 33 und seiner Dichtfläche 31 eine abdichtende Verbindung zwischen dem Düsenhaltekörper 10 und dem Druckstutzen 20 erzeugt wird.

Bei weiteren Ausführungsbeispielen, dargestellt in Fig. 2, 3, 4 und 5, sind diejenigen Elemente, die mit denen des ersten identisch sind, mit denselben Bezugszeichen versehen, so daß bezüglich deren Beschreibung auf die Ausführungen zum ersten Ausführungsbeispiel voll inhaltlich Bezug genommen wird.

Im Gegensatz zum ersten Ausführungsbeispiel ist der deformierbare Körper jedoch bei dem in Fig. 2 dargestellen weiteren Ausführungsbeispiel ein Dichtring 40, der zwischen der Sitzfläche 12 des Düsenhaltekörpers 10 und einer parallel zu dieser an dem Druckstutzen 20 angeordneten planen Fläche 26 angeordnet ist.

Dieser aus einem leicht deformierbaren Stahl bestehende Dichtring 40 wird beim Einschrauben des Druckstutzens wie in Fig. 2 dargestellt deformiert.

Die in Fig. 3 dargestellte Ausführungsform unterscheidet sich von der in Fig. 2 dadurch, daß der Dichtring hier ein aus einem leicht verformbaren Stahl oder Weicheisen bestehender Metallring ist, der im Schnitt eine im wesentlichen W-förmige Querschnittsgestalt aufweist.

Bei der in Fig. 4 dargestellten Ausführungsform umfaßt der deformierbare Körper einen vorzugsweise aus einem leicht verformbaren Stahl bestehenden Ring 60, der von einem, in eine in ihm ausgebildete ringförmig umlaufende Ausnehmung eingreifenden gummielastischen Dichtring 64 formschlüssig umgeben ist. Beim Einschrauben des Druckstutzens 20 deformieren sich sowohl der Stahlring 60 als auch der diesen formschlüssig umgebende gummielastische Dichtring 64.

Bei der in Fig. 5 dargestellten Ausführungsform entfällt ein zwischen dem Druckstutzen 20 und dem Düsenhaltekörper 10 angeordneter deformierbarer Körper vollständig. Vielmehr weist der Druckstutzen 20 an seiner der Sitzfläche 12 zugewandten Seite eine einstückige an ihm angeordnete Dichtlippe 70 auf, die im Schnitt einen im wesentlichen schwalbenschwanzförmige Gestalt aufweist und die beim Einschrauben des Druckstutzens 20 definiert deformiert wird. Auch hierbei wird das Hauptanzugsmoment - wie oben bereits beschrieben - durch die an dem Druckstutzen ausgebildete Schulter 27 auf die an dem Düsenhaltekörper ausgebildete Andruckfläche 13 übertragen, wohingegen nur ein kleinerer Teil des Anzugsmoments zur Deformation der Dichtlippe 70 verwendet wird.

## Patentansprüche

1. Kraftstoffzuleitungseinrichtung für eine im Zylinderkopf einer Brennkraftmaschine eingesetzte Kraftstoffeinspritzdüse mit einem Druckstutzen (20), der zulaufseitig mit dem Anschlußstück eines Zulaufrohrs dicht verbindbar ist und der auslaufseitig eine Dichtfläche aufweist, über welche der Druckstutzen axial gegen eine Sitzfläche (12) am Düsenhaltekörper (10) der Kraftstoffeinspritzdüse mittels einer Schraubverbindung anpreßbar ist, wobei an dem Druckstutzen (20) eine Schulter (27) ausgebildet ist und die Dichtfläche an einem zwischen dem Druckstutzen (20) und dem Düsenhaltekörper (10) vorgesehenen, durch Einschrauben des Druckstutzens (20) definiert deformierbaren Körper (30; 40; 50; 60; 64; 70) angeordnet ist, **dadurch gekennzeichnet, daß** die Schulter (27) beim Einschrauben des Druckstutzens (20) zur Aufnahme des Anzugsmoments an eine zu ihr komplementär an dem Düsenhalterkörper (10) ausgebildete, ringförmig umlaufende Andruckfläche (13) anpreßbar ist.

2. Kraftstoffzuleitungseinrichtung nach Anspruch 1, **dadurch gekennzeichnet, daß** der deformierbare Körper ein vorzugsweise aus einem leicht verformbaren Werkstoff bestehendes Formteil (30) ist, das an seiner der Sitzfläche (12) zugewandten Seite die Dichtfläche (31) aufweist und an seiner dem Druckstutzen (20) zugewandten Seite konisch ausgebildet ist und eine Dichtkante (33) aufweist, die in einer konischen Ausnehmung (25) des Druckstutzens (20) dicht anliegt.

3. Kraftstoffzuleitungseinrichtung nach Anspruch 1, **dadurch gekennzeichnet, daß** der deformierbare Körper ein aus einem leicht verformbaren Werkstoff bestehender Dichtring (40) ist.

4. Kraftstoffzuleitungseinrichtung nach Anspruch 1, **dadurch gekennzeichnet, daß** der deformierbare Körper ein aus einem leicht verformbaren Stahl oder Weicheisen bestehender Körper ist, der im Schnitt eine im wesentlichen W-förmige Gestalt aufweist.

5. Kraftstoffzuleitungseinrichtung nach Anspruch 1, **dadurch gekennzeichnet, daß** der deformierbare Körper einen, vorzugsweise aus einem leicht verformbaren Stahl bestehenden Ring umfaßt, der von einem in eine in ihm ausgebildete, ringförmig umlaufende Ausnehmung (61) eingreifenden gummielastischen Dichtring (64) formschlüssig umgeben ist.

6. Kraftstoffzuleitungseinrichtung für eine im Zylinderkopf einer Brennkraftmaschine eingesetzte Kraftstoffeinspritzdüse mit einem einen Durchgang im Zylinderkopf durchsetzenden Druckstutzen (20), der zulaufseitig mit dem Anschlußstück eines Zulaufrohrs dicht verbindbar ist und der auslaufseitig eine Dichtfläche aufweist, über welche der Druckstützen axial gegen eine Sitzfläche (12) am Düsenhaltekörper (10) der Kraftstoffeinspritzdüse mittels einer Schraubverbindung anpreßbar ist, wobei an dem Druckstutzen (20) eine Schulter (27) ausgebildet ist, **dadurch gekennzeichnet, daß** die Schulter (27) beim Einschrauben des Druckstutzens (20) zur Aufnahme des Anzugsmoments an eine zu ihr komplementär an dem Düsenhaltekörper (10) ausgebildete, ringförmig umlaufende Andruckfläche (13) anpreßbar ist und daß an dem Druckstutzen (20) an seiner dem Düsenhaltekörper (10) zugewandten Seite eine definiert deformierbare Dichtlippe (70) einstückig ausgebildet ist.

7. Kraftstoffzuleitungseinrichtung nach Anspruch 6, **dadurch gekennzeichnet, daß** die Dichtlippe (70) im Schnitt eine schwalbenschwanzähnliche Gestalt aufweist.

## Claims

1. Fuel supply line system for a fuel injection nozzle inserted into the cylinder head of an internal combustion engine, comprising a pressure connector (20) that can be connected leaktightly on an inlet side to a connection piece of an inlet tube and that on an outlet side has a sealing face, via which the pressure connector can be pressed axially against a seat face (12) on a nozzle holder body (10) of the fuel injection nozzle by means of a screw connection, a shoulder (27) being formed on the pressure connector (20) and the sealing face being arranged on a body (30; 40; 50; 60; 64; 70) that is provided between the pressure connector (20) and the nozzle holder body (10) and that can be deformed in a defined manner by screwing in the pressure connector (20), **characterized in that**, as the pressure connector (20) is screwed in, the shoulder (27) can be pressed against an annularly encompassing contact pressure face (13) formed in a complimentary fashion to it on the nozzle holder body (10) in order to absorb the tightening torque.

2. Fuel supply line system according to Claim 1, **characterized in that** the deformable body is a moulding (30) that is preferably composed of an easily deformed material and, on its side facing the seat face (12), has the sealing face (31) and, on its side facing the pressure connector (20), is embodied conically and has a sealing edge (33), which rests leaktightly in a conical recess (25) of the pressure connector (20).

3. Fuel supply line system according to Claim 1, **characterized in that** the deformable body is a sealing ring (40) composed of an easily deformable material.

4. Fuel supply line system according to Claim 1, **characterized in that** the deformable body is a body composed of an easily deformable steel or soft iron, which has an essentially W-shaped form in section.

5. Fuel supply line system according to Claim 1, **characterized in that** the deformable body is a ring that is preferably composed of an easily deformable steel and is surrounded in form-locking fashion by a rubber-elastic sealing ring (64) that engages in an annularly encompassing recess (61) formed in it.

6. Fuel supply line system for a fuel injection nozzle inserted into the cylinder head of an internal combustion engine, comprising a pressure connector (20) that passes through a passage in the cylinder head and can be connected leaktightly on an inlet side to the connection piece of an inlet tube and that on an outlet side has a sealing face, via which the pressure connector can be pressed axially against a seat face (12) on the nozzle holder body (10) of the fuel injection nozzle by means of a screw connection, a shoulder (27) being formed on the pressure connector (20), **characterized in that**, as the pressure connector (20) is screwed in, the shoulder (27) can be pressed against an annularly encompassing contact pressure face (13) formed in a complimentary fashion to it on the nozzle holder body (10) in order to absorb the tightening torque, and **in that** a sealing lip (70) that is deformable in a defined way is formed integrally on the side of the pressure connector (20) that faces the nozzle holder body (10).

7. Fuel supply line system according to Claim 6, **characterized in that** the sealing lip (70) has a dovetail form in section.

## Revendications

1. Installation d'alimentation en carburant pour un injecteur monté dans la culasse d'un moteur à combustion interne, comportant un ajutage de pression (20) relié du côté de l'alimentation de manière étanche à la pièce de raccordement d'un tuyau d'alimentation, et qui, en sortie, comporte une surface d'étanchéité par l'intermédiaire de laquelle l'ajutage de pression est pressé axialement contre une surface formant siège (12) contre le corps de support de buse (10) de l'injecteur par une liaison vissée, l'ajutage de pression (20) comportant un épaulement (27), alors que la surface d'étanchéité est réalisée sur un organe déformable (30, 40, 50, 60, 64, 70) de manière définie par le vissage de l'ajutage de pression (20), et monté entre l'ajutage de pression (20) et le corps de support de buse (10),
**caractérisée en ce que**
l'épaulement (27) est pressé contre une surface d'appui (13) périphérique, annulaire, réalisée sur le support d'injecteur (10), de manière complémentaire, pour recevoir le couple de serrage lorsqu'on visse l'ajutage de pression (20).

2. Installation d'alimentation en carburant selon la revendication 1,
**caractérisée en ce que**
l'organe déformable est de préférence une pièce de forme (30) notamment en une matière facile à déformer, et dont le côté tourné vers la surface formant siège (12) comporte la surface d'étanchéité (31), alors que son côté tourné vers l'ajutage de pression (20) est de forme conique et comporte une arête d'étanchéité (33) venant s'appliquer de manière étanche dans une cavité conique (25) de l'ajutage de pression (20).

3. Installation d'alimentation en carburant selon la revendication 1,
**caractérisée en ce que**
l'organe déformable est un joint d'étanchéité (40) réalisé en un matériau facilement déformable.

4. Installation d'alimentation en carburant selon la revendication 1,
**caractérisée en ce que**
l'organe déformable est un organe en acier facilement défonnable ou en fer doux, ayant en coupe une section essentiellement en forme de W.

5. Installation d'alimentation en carburant selon la revendication 1,
**caractérisée en ce que**
l'organe déformable comprend un anneau notamment en acier facile à déformer, entouré par un joint d'étanchéité (64) de forme adaptée, en caoutchouc, pénétrant dans une gorge annulaire (61) réalisée dans l'anneau.

6. Installation d'alimentation en carburant pour un injecteur monté dans la culasse d'un moteur à combustion interne, comportant un ajutage de pression (20) traversant un passage de la culasse, qui est relié de manière étanche du côté de l'alimentation à une pièce de branchement d'un tuyau d'alimentation, et qui, en sortie, comporte une surface d'étanchéité par laquelle il est pressé axialement contre une surface de siège (12) du support (10) dc l'injecteur par une liaison vissée, l'ajutage de pression (20) ayant un épaulement (27),
**caractérisée en ce que**
l'épaulement (27) lorsqu'on visse l'ajutage de pression (20) est pressé contre une surface de pression (13) périphérique annulaire de forme complémentaire réalisée sur le support d'injecteur (10) pour recevoir le couple de serrage, et le côté de l'ajutage de pression (20) tourné vers le support (10) comporte en une seule pièce une lèvre d'étanchéité (70) déformable de manière définie.

7. Installation d'alimentation en carburant selon la revendication 6.
**caractérisée en ce que**
la lèvre d'étanchéité (70) a en coupe une forme de queue d'aronde.
